# EUROPÄISCHE PATENTSCHRIFT

(11) **EP 0 632 210 B1**
(45) Veröffentlichungstag und Bekanntmachung des Hinweises auf die Patenterteilung: **13.10.1999**
(21) Anmeldenummer: 94110066.1
(22) Anmeldetag: 29.06.1994
(51) Int. Cl.: F16D 3/18

(54) **Zahnkupplung, insbesondere für ein Antriebsaggregat eines Schienenfahrzeugs**
Toothed coupling, especially for a railway vehicle drive unit
Accouplement à dents, notamment pour unité de traction d'une véhicule ferroviaire

(30) Priorität: 01.07.1993 DE 4321986
(43) Veröffentlichungstag der Anmeldung: 04.01.1995
(73) Patentinhaber: ZF Hurth Bahntechnik GmbH, 80809 München (DE)
(72) Erfinder: Sacher, Christoph, D-82223 Eichenau (DE)
(74) Vertreter: Zietlow, Karl-Peter

(56) Entgegenhaltungen:
- CH-A- 230 554
- DE-A- 3 639 586
- DE-B- 2 361 367
- DE-C- 807 873
- US-A- 1 759 338
- US-A- 3 132 494
- US-A- 4 198 832

## Beschreibung

Die Erfindung betrifft eine Zahnkupplung gemäß dem Oberbegriff des Hauptanspruchs.

Zahnkupplungen der doppelkardanischen Bauart werden in den verschiedensten Bereichen der Antriebstechnik zum Verbinden einer treibenden Welle mit einer getriebenen Welle verwendet, wenn zwischen den beiden Wellen auftretende achsparallele, axiale und/oder winkelige Verlagerungen von der Kupplung ausgeglichen werden müssen. Der von der Zahnkupplung beanspruchte Einbauraum und/oder die im Betrieb auftretende Auslenkung des Verbindungsteils spielen dabei in vielen Fällen nur eine untergeordnete Rolle. Insbesondere bei den in Drehgestellen untergebrachten Antriebsaggregaten von Schienenfahrzeugen, d.h. zwischen dem Elektromotor und dem Getriebe, steht jedoch in der Regel nur ein sehr kleiner Bauraum zur Verfügung, vor allem in Richtung der Motorwelle. Andererseits sollen wegen der im Interesse eines höheren Fahrkomforts angestrebten großen Federwege möglichst große Wellenverlagerungen aufgenommen werden können; im Hinblick auf den bei häufigen und großen Auslenkungen des Verbindungsteils unter Last auftretenden Verschleiß der Verzahnungen sollte die Auslenkung jedoch möglichst gering sein.

Bei der Suche nach einer für den genannten Verwendungszweck geeigneten Zahnkupplung stellte sich heraus, daß die am häufigsten und bei Schienenfahrzeug-Antrieben wohl ausschließlich anzutreffende Bauart, nämlich die mit außenliegendem, d.h. innenverzahnten Verbindungsglied, den gestellten Anforderungen nicht genügen kann. Auch im "Kupplungs-Atlas" von A. Schalitz (AGT-Verlag Georg Thum, 3. Auflage, 1968) findet sich keine Zahnkupplung, die für den genannten Anwendungszweck als optimal anzusehen wäre.

Zusätzlich zu den geforderten mechanischen Eigenschaften kommen insbes. bei Schienenfahrzeugen vielfach noch Forderungen nach einer Langzeitschmierung und/oder absolutem Schutz des Elektromotors gegen aus der Zahnkupplung evtl. austretendes Schmiermittel. Auch in dieser Beziehung kann keine der im "Kupplungs Atlas" gezeigten Ausführungen als befriedigend angesehen werden.

Aus der DE 32 15 823 C2 und der DE 807 873 sind Zahnkupplungen mit innenliegendem, d.h. außenverzahntem Verbindungsglied bekannt, deren Verzahnungen zwar im Betrieb Schmieröl zugeführt wird, die aber über keinerlei Abdichtung gegen Ölaustritt verfügen. Außerdem sind sie sehr langbauend, so daß sie für den genannten Anwendungsfall nicht brauchbar sind.

Der Erfindung liegt deshalb die Aufgabe zugrunde, eine Zahnkupplung der genannten Bauart so weiterzuentwickeln, daß sie bei kürzestmöglicher Baulänge auch bei einem großen Versatz zwischen den zu verbindenden Wellen nur geringe Bewegungen in der Verzahnung bzw. eine geringe Auslenkung des Verbindungsgliedes erforderlich sind. Sie soll auch über eine Langzeitschmierung verfügen können und ein Austreten des Schmiermittels soll verhindert werden. Darüber hinaus soll der Ein- und Ausbau von Motor und Getriebe einfach erfolgen können.

Diese Aufgabe wird gelöst mit einer Zahnkupplung, die die Kennzeichen des Hauptanspruchs aufweist. Diese Ausführung ermöglicht bei kürzestmöglicher Baulänge einen größtmöglichen Abstand der beiden Verzahnungen voneinander und damit eine geringe Auslenkung auch bei größerem Wellen-Versatz. Die Trennung des Verbindungsgliedes in zwei Hälften ermöglicht den separaten Ausbau von Motor oder Getriebe aus dem Fahrzeug oder Drehgestell, ohne das gesamte Antriebsaggregat ausbauen zu müssen. Jede Kupplungshälfte besitzt einen separaten Schmiermittelraum mit dem Vorteil, daß beim Ausbau des Motors oder des Getriebes das Schmiermittel nicht abgelassen werden muß, sondern in der mit dem jeweiligen Aggregat verbundenen Kupplungshälfte verbleiben kann. Im Kennzeichen des Anspruchs 2 wird eine zweckmäßige Ausführung der Kupplungsteile aufgezeigt, die nicht nur eine kostengünstige Herstellung erlaubt, sondern infolge des Wegfalls der sonst außen vorhandenen Schraubenköpfe usw. platzsparend ist.

Die Ansprüche 3 bis 5 zeigen vorteilhafte Weiterbildungen der Erfindung.

Mit der Gestaltung der Zahnkupplung nach Anspruch 6 wird vermieden, daß das Verbindungsglied ungewollt eine Extremlage einnimmt und dabei die einwandfreie Funktion der Zahnkupplung beeinträchtigen kann.

In einer vorteilhaften Ausführungsform ist zwischen jedem Stützring und dem jeweils benachbarten Endbereich des Verbindungsgliedes jeweils eine elastische Dichtung (18, 28) angeordnet.

Dabei sind die im Anspruch 6 genannten Federn auch hier insofern von Bedeutung, als sie ein Verformen der Dichtungen verhindern.

Bei Schienenfahrzeug Antrieben werden häufig Labyrinth-Dichtungen vorgesehen zum Schutz von Wälzlagern und Lippendichtungen gegen Verschmutzung von außen. Hier läßt sich mit der erfindungsgemäß außgeführten Zahnkupplung weiterer Bauraum einsparen, wenn die Stege der innenverzahnten Kupplungsteile nach Anspruch 8 an ihren Außenseiten das Profil des rotierenden Labyrinth-Teils erhalten, so daß dafür keine eigenen Teile erforderlich werden.

Die Erfindung wird nachstehend anhand eines in einer Figur teils im Schnitt, teils in der Ansicht dargestellten Ausführungsbeispiels näher beschrieben.
Im Gehäuse eines nur angedeuteten Elektromotors 1 ist eine Motor oder treibende Welle 2 in Wälzlagern, von denen nur eines gezeigt und mit 4 bezeichnet ist, drehbar gelagert aufgenommen. Auf das aus dem Gehäuse austretende Wellenende 3 ist ein erstes Kupplungsteil 10 drehfest aufgebracht, das eine Innenverzahnung 14 aufweist. Im Gehäuse eines dem Elektromotor 1 gegenüberliegenden, ebenfalls nur angedeuteten Getriebes 6 ist eine Eingangs- oder getriebene Welle 7 in Wälzlagern, von denen nur eines gezeigt und mit 9 bezeichnet ist, drehbar gelagert aufgenommen. Auf das aus dem Gehäuse austretende Wellenende 8 ist ein zweites Kupplungsteil 20 drehfest aufgebracht, das eine Innenverzahnung 24 aufweist. Zum treibenden Verbinden des ersten (10) mit dem zweiten Kupplungsteil 20 ist ein hohlzylindrisches Verbindungsglied 30 vorgesehen, das an seinen beiden Endbereichen 31, 32 je eine ballige Außenverzahnung 33, 34 aufweist, von denen die eine in die Innenverzahnung 14 des ersten Kupplungsteils 10 und die andere in die Innenverzahnung 24 des zweiten Kupplungsteils 20 eingreift.

Die beiden Kupplungsteile 10, 20 bestehen jeweils aus einer Nabe 11, 21, einem sich radial von diesem nach außen erstreckenden scheibenförmigen Steg 12, 22 und einem sich in axialer Erstrekkung an diesen anschließenden Ring 13, 23 mit der Innenverzahnung 14, 24. Die Nabe, der Steg und der Ring schließen dabei jeweils einen einseitig offenen Ringraum 15, 25 ein. Die Kupplungsteile 10, 20 können einstückig hergestellt sein oder aus zwei oder mehr Teilen zusammengesetzt sein. Im Ausführungsbeispiel bestehen die Naben 11, 21 mit den Stegen 12, 22 aus einem Stück, an das die innenverzahnten Ringe 13, 23 durch Elektronenstrahlschweißen angefügt wurden. Selbstverständlich ist auch die Anwendung anderer Verbindungsverfahren möglich, z.B. Reibschweißen. Die Kupplungsteile 10, 20 lassen sich ohne weiteres dem jeweiligen Einsatzfall anpassen: Die Nabe 11, 21 kann - wie gezeigt - eine zylindrische Bohrung haben oder ein Zahnnaben- oder ein Innenkeilprofil, je nachdem, was die Hersteller vom Elektromotor und vom Getriebe vorgeben. Insbesondere der Steg 12, 22 kann, wie gezeigt, auf der dem Motor bzw. dem Getriebe zugewendeten Seite eine Kontur erhalten, die dem Gegenstück einer motor- oder getriebeseitig vorgegebenen Labyrinth-Dichtung 5 od. dgl. entspricht. Auf diese Weise sind für verschiedene Einsatzfälle nur unterschiedliche Kupplungsteile 10, 20 erforderlich, alle anderen Teile der Zahnkupplung können unverändert verwendet werden.

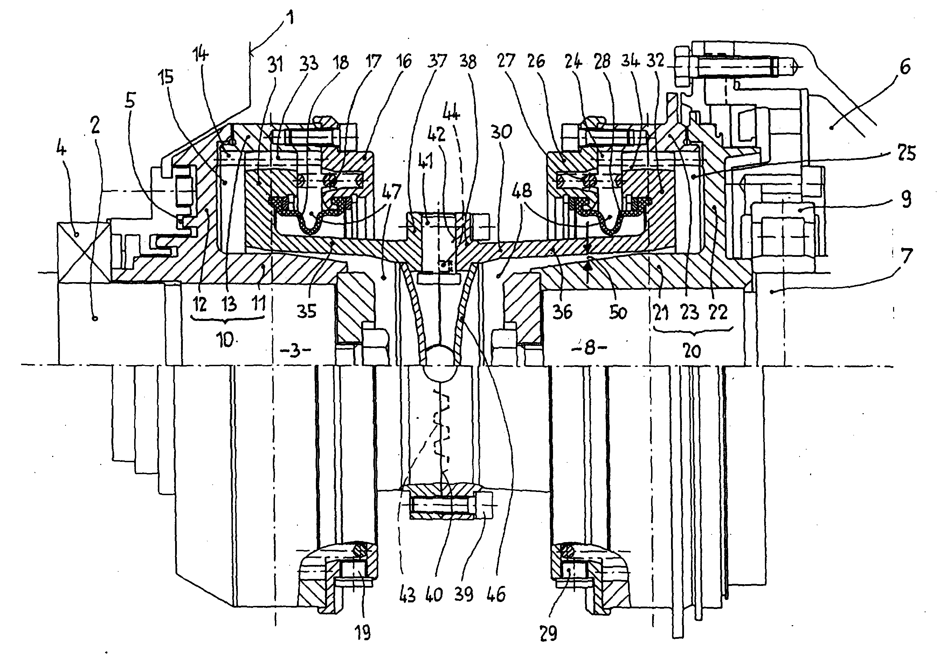

Vor allem für die Anwendung in einem Antriebsaggregat für Schienenfahrzeuge ist eine - wie in der Figur gezeigt - geteilte Ausführung von Vorteil, bei der das Verbindungsglied 30 in einer senkrecht zu seiner Rotationsachse stehenden Ebene 40 in eine erste (35) und eine zweite Hälfte 36 unterteilt ist. Beide Hälften 35, 36 weisen einander zugekehrte Flansche 37, 38 auf, an denen sie mittels Verbindungsschrauben 39 miteinander verbunden sind. Die eine Hälfte (35) hat einen Zentrieransatz 44, der in einer entsprechenden Ausnehmung der anderen Hälfte 36 aufgenommen ist. Zusätzlich zu dieser kraftschlüssigen Verbindung ist noch eine formschlüssige Verbindung in Form von Bolzen 41 vorgesehen, die spielfrei in radial gerichteten Bohrungen 42 aufgenommen sind, deren Achsen in der Teilfuge bzw. Ebene 40 liegen. Statt der Bolzen 41 sind auch andere formschlüssige Verbindungen möglich, z.B. über eine Hirt-Verzahnung 43 od.dgl..

An den beiden die Innenverzahnungen 14, 24 aufweisenden Ringen 13,23 ist auf der dem jeweiligen Steg 12, 22 abgewendeten Seite ein sich im wesentlichen nach innen erstreckender Stützring 16, 26 angeschraubt oder in anderer Weise befestigt zur Aufnahme des einen Endes von je mindestens einer vorgespannten Feder 17, 27, die mit ihrem anderen Ende an dem benachbarten Endbereich 31, 32 des Verbindungsgliedes 30 anliegt. Damit wird erreicht, daß die Verzahnungen 33, 34 des Verbindungsgliedes 30 immer in einer vorgegebenen Lage in den Innenverzahnungen 14, 24 bleiben und das Verbindungsglied 30 nicht ungewollt eine Extremstellung einnehmen kann, in der die einwandfreie Funktion der Zahnkupplung nicht mehr gewährleistet wäre. Aus der Figur ist ersichtlich, daß sich das Verbindungsglied 30 in der gezeichneten Mittelstellung ohne Probleme schrägstellen kann, wenn zwischen den beiden Wellen 2, 7 ein Versatz auftritt. Würde das Verbindungsglied jedoch z.B. weiter nach links verschoben sein, dann käme es bei einem Versatz zwischen den beiden Wellen 2, 7 zu einer Kollision zwischen dem einen Endbereich 31 des Verbindungsgliedes 30 mit dem Steg 12 des ersten Kupplungsteils 10 und/oder zu einem Verklemmen des rohrförmigen Abschnitts des Verbindungsgliedes 30 auf der Nabe 11 des ersten Kupplungsteils 10 im Bereich des geringsten radialen Abstandes 50.

Zwischen den Endbereichen 31, 32 des Verbindungsgliedes 30 und dem jeweils benachbarten Stützring 16, 26 ist, von der Verzahnung 33, 34 radial einwärts, je eine Membrandichtung 18, 28 angeordnet, die mit Sprengringen und/oder anderen geeigneten Mitteln gehalten wird und den jeweiligen Ringraum 15, 25 nach außen abschließt. In den so vollständig nach außen abgeschlossenen Innenraum der Zahnkupplung kann über mit Schrauben 19,29 verschlossene Bohrungen Öl eingefüllt werden zur Langzeitschmierung der Verzahnungen. Voraussetzung dafür ist, daß die Naben 11, 21 ausreichend dicht auf die Wellenenden 3, 8 aufgebracht sind, um ein Eindringen von Öl aus der Zahnkupplung in den Elektromotor 1 bzw. in das Getriebe 6 oder um das Entweichen von Öl aus dem Getriebe 6 in die Zahnkupplung zu verhindern. Wenn, aus welchen Gründen auch immer, der Motor 1 vom Getriebe 6 getrennt werden muß, muß vorher das Öl aus dem Innenraum der Zahnkupplung abgelassen werden. Um dies zu vermeiden, sind die zentralen Bohrungen der beiden Hälften 35, 36 des Verbindungsgliedes 30 in der Nähe der Teilfuge 40 mit eingepreßten Verschlußkappen 46 öldicht verschlossen. Auf diese Weise entstehen voneinander unabhängige Ölräume 47 auf der Motorseite und 48 auf der Getriebeseite, die auch nach einem Lösen der Schrauben 39 erhalten bleiben.

Zur Ölstandskontrolle ist diametral zu den Schrauben 19, 29 je eine weitere, nicht dargestellte Bohrung vorgesehen, die ebenfalls mit je einer Schraube verschlossen werden. Wenn die Zahnkupplung so gedreht wird, daß die einander gegenüberliegenden Schrauben auf einer Waagrechten liegen, dann kann durch die eine Bohrung Öl eingefüllt werden, bis der Ölstand die Unterkante der anderen Bohrung erreicht hat.

Wie aus der Figur ersichtlich ist, nutzt die erfindungsgemäße Zahnkupplung den zwischen dem Elektromotor 1 und dem Getriebe 6 zur Verfügung stehenden Bauraum optimal aus. In diesem Zusammenhang sind die folgenden Punkte besonders hervorzuheben:
a) Angrenzend an den Motor 1 und an das Getriebe 6 sind keine bei einer Achsversetzung beweglichen Teile vorhanden; damit ist kein Bewegungs-Freiraum zwischen der Zahnkupplung und dem Motor bzw. Getriebe erforderlich.
b) In die Stege 12, 22 ist außen die Kontur des Gegenstücks einer am Motor 1 und/oder am Getriebe 6 vorgesehenen Labyrinth-Dichtung 5 integriert; dadurch ist kein zusätzlicher Bauraum für separate Dichtungsteile erforderlich.
c) Die die balligen Außenverzahnungen 33, 34 tragenden Endbereiche 31, 32 des Verbindungsgliedes sind bis auf den erforderlichen Bewegungs-Freiraum an die ganz außen angeordneten Stege 12,22 herangerückt; dadurch größtmöglicher Abstand der Zahnmitten.
Als weitere Vorzüge der erfindungsgemäßen Zahnkupplung sind zu nennen:
d) Nur das erste (10) und das zweite Kupplungsteil 20 liegen unmittelbar am Motor 1 und am Getriebe 6 an und müssen den jeweiligen Anschlußmaßen und Konturen angepaßt werden, alle anderen Teile der Zahnkupplung können immer gleich bleiben; dadurch vereinfachte Fertigung und Lagerhaltung wegen nur wenig Unterschiedsteilen.
e) Das Verbindungsglied ist in zwei Hälften 35, 36 geteilt; dadurch einfacher und voneinander unabhängiger Ein- und Ausbau von Motor 1 und Getriebe 6.
f) Jede Kupplungshälfte ist separat abgedichtet; dadurch entstehen zwei voneinander unabhängige Ölräume 47, 48, die auch bei einer Trennung des Verbindungsgliedes 30 funktionsfähig bleiben.
g) Die vorgespannten Federn 17, 27 halten nicht nur das Verbindungsglied 30 in der angestrebten Mittellage, sondern schieben beim Trennen des Verbindungsgliedes 30 die beiden Hälften 35, 36 auseinander; dadurch kann die Zentrierung 44 und/oder die Hirt-Verzahnung 43 einfach gelöst bzw. können die Bolzen 41 - wenn erforderlich - leicht entfernt werden.

### Begriffsliste

- 1: Elektromotor
- 2: Welle von 1
- 3: Wellenende
- 4: Wälzlager
- 5: Labyrinth-Dichtung
- 6: Getriebe
- 7: Welle von 6
- 8: Wellenende
- 9: Wälzlager
- 10: erstes Kupplungsteil
- 11: Nabe
- 12: Steg
- 13: Ring
- 14: Innenverzahnung von 10
- 15: Ringraum
- 16: Stützring
- 17: Feder
- 18: Membrandichtung
- 19: Schraube
- 20: zweites Kupplungsteil
- 21: Nabe
- 22: Steg
- 23: Ring
- 24: Innenverzahnung von 20
- 25: Ringraum
- 26: Stützring
- 27: Feder
- 28: Membrandichtung
- 29: Schraube
- 30: Verbindungsglied
- 31: Endbereich von 30
- 32: Endbereich von 30
- 33: Außenverzahnung
- 34: Außenverzahnung
- 35: erste Hälfte von 30
- 36: zweite Hälfte von 30
- 37: Flansch
- 38: Flansch
- 39: Verbindungsschraube
- 40: Teilfuge
- 41: Bolzen
- 42: Bohrung
- 43: Hirt-Verzahnung
- 44: Zentrieransatz
- 45: ---
- 46: Verschlußkappe
- 47: Ölraum
- 48: Ölraum
- 49: ---
- 50: radialer Abstand

## Patentansprüche

1. Zahnkupplung zum Verbinden einer treibenden Welle (2) mit einer getriebenen Welle (7), insbes. für ein Antriebsaggregat für ein Schienenfahrzeug, mit
- einem ersten innenverzahnten Kupplungsteil (10), das eine Nabe (11) aufweist zum drehfesten Aufsetzen auf die treibende Welle (2),
- einem zweiten innenverzahnten Kupplungsteil (20), das eine Nabe (21) aufweist zum drehfesten Aufsetzen auf die getriebene Welle (7), und
- einem hohlzylindrischen Verbindungsglied (30), das an seinen beiden Endbereichen (31, 32) je eine ballige Außenverzahnung (33, 34) aufweist, von denen die eine (33) in die Innenverzahnung (14) des ersten Kupplungsteils (10) und die andere (34) in die Innenverzahnung (24) des zweiten Kupplungsteils (20) eingreift,
dadurch gekennzeichnet,
daß die Nabe (11, 21) jedes innenverzahnten Kupplungsteils (10, 20) unter Bildung eines einseitig offenen Ringraumes (15, 25) über einen Steg (12, 22) mit einem die Innenverzahnung (34, 24) aufweisenden Ring (13, 23) verbunden ist, daß die Endbereiche (31, 32) des Verbindungsgliedes (30) in je einen Ringraum (15, 25) hineinragen, wobei das Verbindungsteil (30) die Naben (11, 21) mit radialem Abstand (50) umgibt,
daß das Verbindungsglied (30) in einer senkrecht zu seiner Drehachse stehenden Ebene (40) in eine erste (35) und eine zweite Hälfte (36) unterteilt ist,
daß Mittel vorgesehen sind zum kraft und/oder formschlüssigen drehfesten Verbinden der beiden Hälften (35, 36), und daß die zentrale Bohrung jeder Hälfte (35, 36) des Verbindungsgliedes (30) in der Nähe der Teilfuge (40) verschlossen ist.

2. Zahnkupplung nach Anspruch 1, dadurch gekennzeichnet, daß die die Innenverzahnungen (14, 24) aufweisenden Ringe (13, 23) mit dem jeweils zugehörigen Steg (12, 22) durch Reib- oder Elektronenstrahl-Schweißen miteinander verbunden sind.

3. Zahnkupplung nach Anspruch 1 oder 2, dadurch gekennzeichnet, daß die beiden Hälften (35, 36) an einander zugewandten Flanschen (37, 38) miteinander verschraubt sind.

4. Zahnkupplung nach Anspruch 3, dadurch gekennzeichnet, daß zusätzlich zu den Schrauben (39) radial gerichtete Bolzen (41) vorgesehen sind, die spielfrei in Bohrungen (42) aufgenommen sind, deren Achsen in der Teilfuge (40) liegen.

5. Zahnkupplung nach Anspruch 3, dadurch gekennzeichnet, daß zusätzlich zu den Schrauben (39) eine in die beiden Flansche (37, 38) eingearbeitete Hirt-Verzahnung (43) vorgesehen ist.

6. Zahnkupplung nach einem der Ansprüche 1 bis 5, dadurch gekennzeichnet, daß an beiden die Innenverzahnung (14, 24) aufweisenden Ringen (13, 23) auf der dem jeweiligen Steg (12, 22) abgewendeten Seite ein sich im wesentlichen radial nach innen erstreckender Stützring (16, 26) angebracht ist und zwischen jedem Stützring (16, 26) und dem benachbarten Endbereich (31, 32) des Verbindungsgliedes (30) wenigstens eine vorgespannte Feder (17, 27) vorgesehen ist.

7. Zahnkupplung nach einem der Ansprüche 1 bis 6, dadurch gekennzeichnet, daß zwischen jedem Stützring (16, 26) und dem jeweils benachbarten Endbereich (31, 32) des Verbindungsgliedes (30) jeweils eine elastische Dichtung (18, 28) angeordnet ist.

8. Zahnkupplung nach mindestens einem der vorhergehenden Ansprüche, dadurch gekennzeichnet, daß in die Außenseiten der Stege (12, 22) des ersten (10) und/oder des zweiten innenverzahnten Kupplungsteils (20) das Profil einer motor- bzw. getriebeseitigen Labyrinth-Dichtung (5) integriert ist.

## Claims

1. Gear coupling for connecting a driving shaft (2) with a driven shaft (7), especially for a power unit of a rail-bound vehicle, with
- a first internally geared coupling element (10), having a hub (11) for rotationally fixed location on the driving shaft (2),
- a second internally geared coupling element (20), having a hub (21) for rotationally fixed location on the driven shaft (7), and
- a hollow-cylindrical connecting element (30), having crowned external gearings (33, 34) on both ends (31, 32), of which one (33) engages with the internal gearing (14) of the first coupling element (10) and the other (34) with the internal gearing (24) of the second coupling element (20),
**characterized** in that
the hub (11, 21) of each internally geared coupling element (10, 20) is connected via a web (12, 22) with a ring (13, 23) having the internal gearing (34, 24), with a unilaterally open ring space (15, 25) being formed;
the ends (31, 32) of the connecting element (30) extend into the ring space (15, 25), with the connecting element (30) surrounding the hubs (11, 21) at a radial distance (50);
the connecting element (30) is separated into a first (35) and a second half (36) in a plane (40) vertical to its rotation axis;
means are provided for force and/or friction-locking, rotationally fixed connection of the two halves (35, 36);
and that the central bore of each half (35, 36) of the connecting element (30) near the joint (40) is closed.

2. Gear coupling acc. to claim 1, **characterized** in that the rings (13, 23) having the internal gearing (14, 24) are each connected to a corresponding web (12, 22) by means of inertia or electron beam welding.

3. Gear coupling acc. to claim 1 or 2, **characterized** in that the two half sections (35, 36) are screwed to each other by means of face-to-face flanges (37, 38).

4. Gear coupling acc. to claim 3, **characterized** in that in addition to the screws (39) radially aligned bolts (41) are provided, inserted without play in bores (42), with their axes in the section joint (40).

5. Gear coupling acc. to claim 3, **characterized** in that in addition to the screws (39) a Hirt gearing (43) is provided, integrated in the two flanges (37, 38).

6. Gear coupling acc. to one of the claims 1 to 5, **characterized** in that on both rings (13, 23) having internal gearing (14,24), there is a supporting ring (16, 26) on the side opposite each web (12, 22), essentially radially inwards arranged, and that there is to be at least one pre-loaded spring (17, 27) between each support ring (16, 26) and the neigh-boring end (31, 32) of the connecting element (30).

7. Gear coupling acc. to one of the claims 1 to 6, **characterized** in that between each support ring (16, 26) and the neighboring end (31, 32) of the connecting element (39) there is an elastic seal (18, 28).

8. Gear coupling acc. to at least one of the above claims, **characterized** in that the profile of an engine and/or transmission-related labyrinth sealing (5) is integrated in the external sides of the webs (12, 22) of the first (10) and/or the second internally geared clutch element (20).

## Revendications

1. Accouplement à dents pour relier un arbre menant (2) à un arbre mené (7) notamment pour une unité de traction d'un véhicule ferroviaire, comprenant
- une première partie d'accouplement (10) à denture intérieure, qui présente un moyeu (11), à placer de manière résistante à la torsion sur l'arbre menant (2),
- une deuxième partie d'accouplement (20) à denture intérieure, qui présente un moyen (21), à placer de manière résistante à la torsion sur l'arbre mené (7) et
- un membre de connexion (30) en forme de cylindre creux qui présente dans ses deux régions extrêmes (31, 32) une denture extérieure bombée dont l'une (33) s'engrène dans la denture intérieure (14) de la première partie (10) de l'accouplement et l'autre (34) s'engrène dans la denture intérieure (24) de la deuxième partie (20) de l'accouplement,
caractérisé
en ce que le moyeu (11, 21) de chaque partie de l'accouplement (10, 20) à denture intérieure est reliée par un profil (12, 22) à une bague (13, 23) présentant la denture intérieure (14, 24) en formant un espace (15, 25) à l'intérieur de la bague ouvert d'un côté,
en ce que les régions extrêmes (31, 32) de l'élément de connexion (30) font respectivement saillie dans l'espace intérieur (15, 25) de la bague, le membre de connexion (30) entourant les moyeux (11, 21) à une distance radiale (50),
en ce que le membre de connexion (30) est divisé dans un plan (40) perpendiculaire à son axe de rotation en une première (35) et en une deuxième moitié (36),
en ce que des moyens sont prévus pour connecter de manière résistante à la torsion, en force et / ou intimement, les deux moitiés (35, 36) et en ce que l'orifice central de chaque moitié (35, 36) du membre de connexion (30) est fermé dans le voisinage de la jointure partielle (40).

2. Accouplement à dents selon la revendication 1, caractérisé en ce que les bagues (13, 23) présentant les dentures intérieures (14, 24) sont reliées avec le profil (12, 22) y afférent par un soudage par friction ou par un soudage par bombardement électronique.

3. Accouplement à dents selon la revendication 1 ou 2, caractérisé en ce que les deux moitiés (35, 36) sont visées ensemble à des brides (37, 38) leur faisant face.

4. Accouplement à dents selon la revendication 3, caractérisé en ce que, outre les vis (39), il est prévu des boulons (41) orientés radialement qui sont placés sans jeu dans les orifices (42) dont les axes se trouvent dans la jointure partielle (40).

5. Accouplement à dents selon la revendication 3, caractérisé en ce que, outre les vis (39), il est prévu un crantage Hirth (43) incorporé dans les deux brides (37, 38).

6. Accouplement à dents selon une des revendications 1 à 5, caractérisé en ce qu' une bague d'appui (16, 26) s'étendant de manière essentiellement radiale vers l'intérieur est placée sur le côté des bagues (13, 23) présentant la denture intérieure (14, 24) qui est opposé à chaque profil (12, 22) et qu'il est prévu au moins un ressort précontraint (17, 27) entre chaque bague d'appui (16, 26) et la région extrême (31, 32) voisine du membre de connexion (30).

7. Accouplement à dents selon une des revendications 1 à 6, caractérisé en ce qu'une garniture (18, 28) est respectivement placée entre chaque bague d'appui (16, 26) et la région extrême voisine (31, 32) du membre de connexion (30).

8. Accouplement à dents selon au moins une des revendications précédentes, caractérisé en ce que le contour d'une bague à labyrinthe (5) à côté du moteur et / ou de la transmission est intégré dans les côtés extérieurs des profils (12, 22) de la première (10) et / ou de la deuxième partie (20) de l'accouplement à denture intérieure.
